(19) Europäisches Patentamt
European Patent Office
Office européen des brevets

(11) EP 4 761 070 A1

(12) EUROPEAN PATENT APPLICATION
published in accordance with Art. 153(4) EPC

(43) Date of publication:
17.06.2026 Bulletin 2026/25

(51) International Patent Classification (IPC):
H02K 1/2783 (2022.01)

(21) Application number: 24851384.8

(22) Date of filing: 11.06.2024

(52) Cooperative Patent Classification (CPC):
H02K 1/2783

(86) International application number:
PCT/JP2024/021131

(87) International publication number:
WO 2025/032951 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.08.2023 JP 2023130552

(71) Applicant: Hitachi, Ltd.
Tokyo 100-8280 (JP)

(72) Inventors:
• ITO, Makoto
Tokyo 100-8280 (JP)
• SUTO, Tetsuya
Tokyo 100-8280 (JP)

(74) Representative: MERH-IP Matias Erny Reichl
Hoffmann
Patentanwälte PartG mbB
Paul-Heyse-Straße 29
80336 München (DE)

(54) ROTARY ELECTRIC MACHINE AND ROTOR THEREFOR

(57) The purpose of the present invention is to provide a rotor having a rotor core structure capable of improving torque. In a rotor according to the present invention, a rotor core 31 is configured from an assembly of split cores 311. Each split core 311 comprises: a main pole magnet slot 312 into which a main pole magnet 321 is inserted; a d-axis core part 311a which is on the stator 2-side of the main pole magnet slot 312; and a back yoke 311b which is on the reverse side of the main pole magnet slot 312 from the d-axis core part 311a. A housing 33 comprises a projection part 332 that projects inward in the radial direction. The housing 33 including the projection part 332 is configured from a non-magnetic material. Two adjacent split cores 311 and projection parts 332 constitute a spoke magnet slot 313 for accommodating a spoke magnet 322. The split cores 311 and the housing 33 are coupled by a dovetail structure composed of the back yokes 311b and the projection parts 332.

FIG. 3

EP 4 761 070 A1

## Description

Technical Field

The present invention relates to a rotary electric machine and a rotor therefor.

Background Art

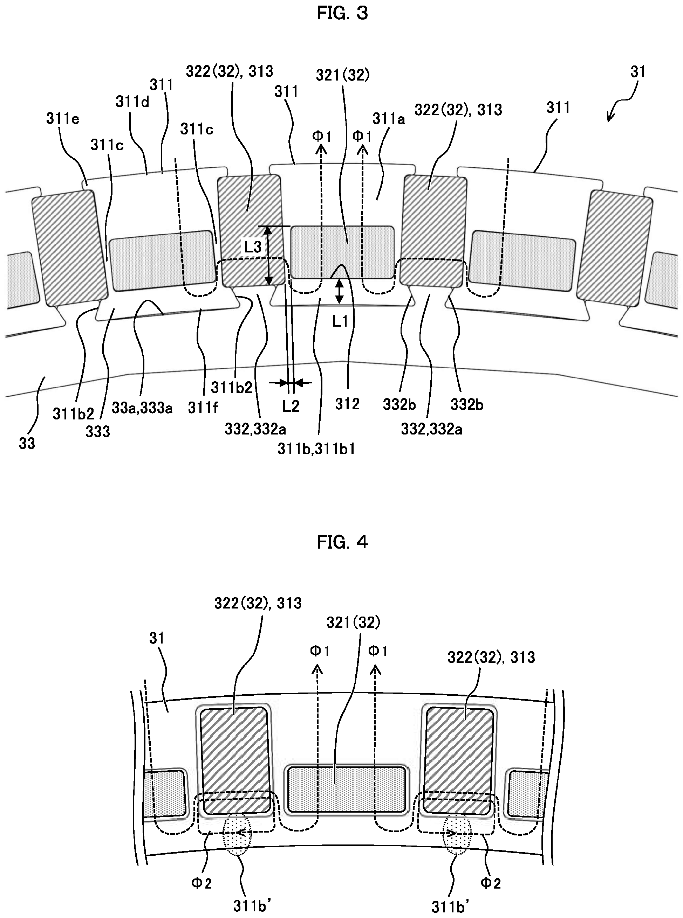

PTL 1 discloses a rotary electric machine including a rotor including a magnet and a rotor core in which a magnet hole into which the magnet is inserted is formed, and a stator facing the rotor with a predetermined gap interposed therebetween. The magnet includes a main pole magnet whose main surfaces face each other in the radial direction of the rotary electric machine and a spoke magnet whose main surfaces face each other in the circumferential direction of the rotary electric machine. A rotor core includes a d-axis core formed between the gap and the main pole magnet, an inter-magnet bridge formed between the main pole magnet and the spoke magnet, a gap surface facing the stator, and a counter gap surface located on a radially opposite side of the gap surface, and the rotor core is formed such that a length between the gap surface and an end part of the spoke magnet on the counter gap surface side is equal to or longer than a length between the gap surface and an end part of the main pole magnet on the counter gap surface side (see Abstract). In the rotor core, a region on the radial gap side with respect to the main pole magnet is referred to as a d-axis core, whereas a region located on the radially reverse side to the gap is referred to as a back yoke, and the back yoke has a shape linked in the circumferential direction on the opposite gap surface side of the main pole magnet and the spoke magnet (see paragraph [0019] and FIGS. 3(a) and 3(b)).

Citation List

Patent Literature

PTL 1: International Publication No. 2023/286606

Summary of Invention

Technical Problem

The arrangement of the main pole magnet and the spoke magnet in PTL 1 is called a Halbach array. In a rotor in which a main pole magnet and a spoke magnet are configured in a Halbach array, for example, a magnetic flux entering from an S pole passes through the main pole magnet, and then sequentially passes through a back yoke, the spoke magnet, a back yoke on an N pole side, and the main pole magnet on the N pole side. In this rotor structure, the back yoke on the opposite gap surface side with respect to the main pole magnet is a passage of a magnetic flux necessary for torque generation and is a necessary component as a magnetic circuit, whereas the back yoke on the opposite gap surface side with respect to the spoke magnet is not only a passage of a magnetic flux unnecessary for torque generation but also forms a magnetic circuit in which leakage magnetic flux flows by short-circuiting the S pole and the N pole of the spoke magnet. Therefore, the back yoke on the opposite gap surface side with respect to the spoke magnet may be a factor that hinders the improvement in torque.

An object of the present invention is to provide a rotor having a rotor core structure capable of improving torque.

Solution to Problem

In order to achieve the above object, according to the present invention, a rotor for a rotary electric machine includes:

a magnet, a rotor core into which the magnet is inserted, and a housing that fixes the rotor core, in which

the magnet is configured by a main pole magnet whose magnetization direction is directed in a radial direction and a spoke magnet whose magnetization direction is directed in a circumferential direction,

the rotor core is configured by an assembly of split cores,

the split core includes a main pole magnet slot into which the main pole magnet is inserted, a d-axis core part disposed on a stator side with respect to the main pole magnet slot, and a back yoke disposed on a side reverse to the d-axis core part with respect to the main pole magnet slot,

the housing includes a projection part projecting toward the split core side,

the housing including the projection part is configured of a non-magnetic material,

two adjacent split cores and the projection part constitute a spoke magnet slot that accommodates the spoke magnet, and

the split core and the housing are coupled by a dovetail structure of the back yoke and two projection parts adjacent to the back yoke.

Advantageous Effects of Invention

According to the present invention, it is possible to provide a rotor having a rotor core structure capable of improving torque.

Objects, configurations, and advantageous effects other than those described above will be clarified by the descriptions of the following forms for embodying the present invention.

Brief Description of Drawings

[FIG. 1] FIG. 1 is an exploded three-dimensional view of a rotary electric machine according to an embodiment of the present invention.
[FIG. 2] FIG. 2 is a plan view of a rotor according to the embodiment of the present invention as viewed from an axial direction.
[FIG. 3] FIG. 3 is an enlarged plan view of a III part of a rotor 3 illustrated in FIG. 2.
[FIG. 4] FIG. 4 is a view for describing a problem of a rotor according to a comparative example with the present invention.
[FIG. 5] FIG. 5 is an enlarged plan view illustrating a change example (first change example) of a split core in FIG. 3.
[FIG. 6A] FIG. 6A is an enlarged plan view illustrating a change example (second change example) of the split core in FIG. 3.
[FIG. 6B] FIG. 6B is a partially enlarged view of the change example (second change example) of the split core in FIG. 3.
[FIG. 7] FIG. 7 is an enlarged plan view illustrating a change example (third change example) of the split core in FIG. 3.
[FIG. 8] FIG. 8 is a plan view illustrating a part of a rotor and a stator in a case where a rotary electric machine with fractional slot concentrated winding is configured by using the rotor according to the present invention.
[FIG. 9] FIG. 9 is a view for describing advantages in a case where the rotary electric machine with the fractional slot concentrated winding is configured by using the rotor according to the present invention.
[FIG. 10] FIG. 10 is a view illustrating a configuration of an xEV adopting a rotary electric machine according to the embodiment of the present invention.

Description of Embodiments

Hereinafter, an embodiment of the present invention will be described. In the respective embodiments and the respective drawings, the same reference signs are given to similar configurations, and repetition of similar descriptions is avoided. In addition, in a case where there is a difference in the configurations denoted by the same reference signs, the difference will be described.

[Embodiment 1]

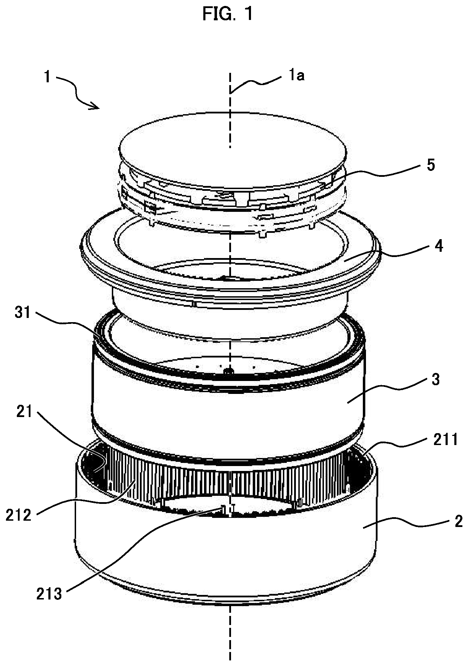

A rotary electric machine 1 according to an embodiment of the present invention will be described with reference to FIG. 1. FIG. 1 is an exploded three-dimensional view of the rotary electric machine 1 according to the embodiment of the present invention.
The rotary electric machine 1 includes a stator 2 and a rotor 3 as main components. The stator 2 includes a stator core 21, and the rotor 3 includes a rotor core 31. The stator 2 and the rotor 3 in the present embodiment are disposed such that the outer peripheral surface of the rotor core 31 faces the inner peripheral surface of the stator core 21. The stator 2 and the rotor 3 are disposed so as not to be in contact with each other, and a gap (air gap) is provided between the stator 2 and the rotor 3. The rotary electric machine 1 may include an end bracket 4 and a power conversion device 5 as other components.
The rotary electric machine 1 in the present embodiment has an inner rotor structure in which the rotor 3 is disposed on the inner peripheral side of the stator core 21, and may have an outer rotor structure in which the rotor 3 is disposed on the outer peripheral side of the stator core 21.
The stator 2 includes the stator core 21 configured by laminating a plurality of core sheets, and a coil 213 wound around the stator core 21. The stator core 21 includes an annular stator back yoke 211, a plurality of teeth 212 that are connected to the stator back yoke 211 and provided on the gap side in the radial direction, and slots formed between the teeth. The stator core 21 may be configured by an integrally molded solid member. In addition, the stator core may have a configuration in which a powder magnetic body such as a powder magnetic core is compression-molded, or may be formed of an amorphous metal or a nanocrystalline material.
The coil 213 is wound around the teeth 212 and the slot. The coil 213 includes an in-slot coil inserted into the slot, a coil end crossing slots having different positions, and a lead wire for inputting a current from an external circuit or connecting coils having different positions. In the coil 213, for example, coils of a U-phase, a V-phase, and a W-phase are disposed in order to generate a rotating magnetic field in the gap. The coils of the three phases are different from each other in the phase of the input current fundamental wave component by 120°, whereby a rotating magnetic field is generated in the gap. The rotor 3 is rotationally driven by the rotating magnetic field.
The power conversion device 5 performs a switching operation to convert DC power supplied from a battery or a DC power source (not illustrated) into three-phase AC power. The three-phase AC power is supplied to a stator winding (not illustrated) of the stator 2, and a rotating magnetic field is generated in the stator 2. Note that, in FIG. 1, the power conversion device 5 is accommodated inside the end bracket 4 and integrated with the rotary electric machine 1. The position of the power conversion device 5 is freely set, and the power conversion device 5 may be separated from the rotary electric machine 1 instead of being integrated with the rotary electric machine 1. Further, whether or not the rotary electric machine 1 includes the end bracket 4 is freely set, and the rotary electric machine 1 does not need to include the end bracket 4.
Although not illustrated in FIG. 1, the rotor 3 is

**EP 4 761 070 A1**

provided with a rotation shaft. A dashed-dotted line 1a in FIG. 1 represents the axis center of the rotation shaft and an extension line thereof. That is, the dashed-dotted line 1a coincides with a rotation axis center of the rotor 3 including the rotation shaft. The rotor 3 and the stator 2 have the same central axis, and the central axis of the rotor 3 coincides with the rotation axis center 1a.

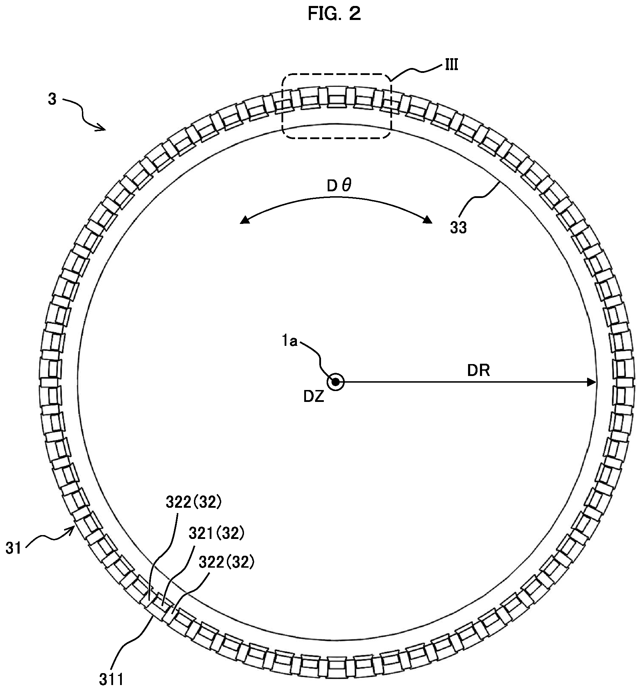

The rotor 3 according to the embodiment of the present invention will be described with reference to FIG. 2. FIG. 2 is a plan view of the rotor 3 according to the embodiment of the present invention as viewed from an axial direction Z.

In the following description, a "radial direction DR", a "circumferential direction Dθ", and an "axial direction DZ" are defined as illustrated in FIG. 2. The "radial direction DR" is a linear direction perpendicular to the rotation axis center 1a, and is a radiation direction about the rotation axis center 1a. The "circumferential direction Dθ" is a circumferential direction around the rotation axis center 1a, and is a rotation direction around the rotation axis center 1a. The "axial direction DZ" is a linear direction parallel to the rotation axis center 1a, and is a direction along the rotation axis center 1a. In addition, regarding an "inner peripheral side" and an "outer peripheral side", a side closer to the rotation axis center 1a is defined as the "inner peripheral side", and a side farther from the rotation axis center 1a is defined as the "outer peripheral side".

The rotor 3 includes a rotor core 31 configured by an assembly of a plurality of split cores 311, a magnet 32 provided in the rotor core 31, and a housing 33 to which the plurality of split cores 311 are fastened. The rotor 3 includes a pressing plate (not illustrated), and the pressing plate presses the split core 311 against the housing 33 while facing one end surface 311a of the split core 311 in the axial direction DZ. The magnet 32 includes a main pole magnet 321 whose magnetization direction is directed in the radial direction and a spoke magnet 322 whose magnetization direction is directed in the circumferential direction. Note that, in order to prevent the split core 311 and the magnet 32 from jumping out in the axial direction with respect to the housing 33, it is desirable that the rotor 3 has a pressing plate, but the pressing plate does not need to be provided.

The rotor 3 rotates about the rotation axis center 1a. The rotation shaft (not illustrated) may be fixed to the rotor 3, and the rotary electric machine 1 may include a frame that covers the stator 2 and the rotor 3. The rotor 3 is connected to a load directly or via a structural member such as the rotation shaft or the frame, and rotation and torque are transmitted to the load by rotation of the rotor 3.

The rotor core 31 is configured by laminating a plurality of core sheets. The rotor core 31 may be configured by an integrally molded solid member. Further, the rotor core 31 may have a configuration in which a powder magnetic body such as a powder magnetic core is compression-molded, or may be formed of an amorphous metal or a nanocrystalline material.

A fastening structure of the split core 311 will be described with reference to FIG. 3. FIG. 3 is an enlarged plan view of a III part of the rotor 3 illustrated in FIG. 2.

The rotor 3 includes the magnet 32, the rotor core 31 into which the magnet 32 is inserted, and the housing 33 to which the rotor core 31 is fixed. The rotor core 31 is configured by an assembly of the split cores 311. The magnet 32 includes a main pole magnet 321 whose magnetization direction is directed in the radial direction and a spoke magnet 322 whose magnetization direction is directed in the circumferential direction.

The housing 33 is fixed to the rotation shaft (not illustrated), and the split core 311 is fastened. The housing 33 has a projection part (housing-side projection part) 332 projecting toward the split core 311 side (the outer peripheral side in the present embodiment) on the outer peripheral surface 311. The projection part 332 of the housing 33 has a housing-side tapered part 332a having a tapered surface 332b whose width in the circumferential direction increases toward the split core 311 side. The housing 33 including the projection part 332 is formed of a non-magnetic material.

In the present embodiment, the projection part 332 is configured as the housing-side tapered part 332a. The entirety of the projection part 332 constitutes the housing-side tapered part 332a, and both side surfaces of the projection part 332 in the circumferential direction are configured by the tapered surfaces 332b.

The housing 33 has a concave part (back yoke accommodation part) 333 that accommodates a back yoke 311a between two projection parts 332. The bottom surface 333a of the concave part 333 is configured by the outer peripheral surface 33a of the housing 33, which is located between two projection parts 332 and faces the inner peripheral surface 311d of the back yoke 311a.

The split core 311 includes a main pole magnet slot 312 into which the main pole magnet 322 is inserted, a d-axis core part 311a disposed on the stator 2 side with respect to the main pole magnet slot 312, and a back yoke 311b disposed on the side reverse to the d-axis core part 311a with respect to the main pole magnet slot 312.

The back yoke 311b of the split core 311 has a split core-side tapered part 311b1 having a tapered surface 311b2 whose width in the circumferential direction increases toward the housing 33 side (the inner peripheral side in the present embodiment). The entirety of the back yoke 311b constitutes the split core-side tapered part 311b1, and both side surfaces of the back yoke 311b in the circumferential direction are configured by the tapered surfaces 332b.

The split core 311 has the main pole magnet slot 312. The main pole magnet slot 312 is configured by the split core 311 alone. More specifically, a bridge part 311c is provided between the main pole magnet slot 312 and the spoke magnet slot 313. The main pole magnet slot 312 is configured by using two bridge parts 211c disposed on both sides in the circumferential direction with respect to the main pole magnet 321, a d-axis core 211a, and the back yoke 311b.

On the other hand, the spoke magnet slot 313 that accommodates the spoke magnet 322 is configured by using at least two adjacent split cores 311 and the projection part 332 of the housing 33. More specifically, the spoke magnet slot 313 is configured by using two bridge parts 311c and two back yokes 311b of two adjacent split cores 311, and the projection part 332 of the housing 33. In this case, the spoke magnet slot 313 is preferably configured to include two d-axis core parts 311a of two adjacent split cores 311. That is, the spoke magnet slot 313 is configured in a range straddling the two bridge parts 311c and the d-axis core part in the radial direction.

The d-axis core part has a d-axis core projection part 311e projecting in the circumferential direction at an end part 311d located on the stator 2 side in the radial direction. The d-axis core projection part 311e is provided to be separated from the d-axis core projection part 311e of the adjacent split core 311.

The back yoke 311b of the split core 311 constitutes a magnetic circuit that guides the magnetic flux of the main pole magnet 321 to the adjacent spoke magnet 322. When a radial width of the back yoke 311b is set as L1, a circumferential width of the bridge part 311c is set as L2, and a radial width of the bridge part 311c is set as L3, L1, L2, and L3 preferably have a relationship of L2 < L1 < L3.

The tapered surfaces 311b2 constituting both side surfaces of the back yoke 311b in the circumferential direction are at positions projecting in the circumferential direction with respect to the bridge part 311c. The back yoke 311b is configured such that the tapered surfaces 311b2 respectively provided in the two adjacent split cores 311 are at positions separated from each other in the circumferential direction. Then, the split core 311 and the housing 33 are fastened such that the projection part 332 of the housing 33 is interposed between the two adjacent tapered surfaces 311b2.

The split core 311 and the housing 33 are coupled by a dovetail structure of the back yoke 311b and two projection parts 332 adjacent to the back yoke 311b. That is, the split core 311 and the housing 33 are coupled in a manner that the tapered surface 311b2 of the split core-side tapered part 311b1 and the tapered surface 332b of the housing-side tapered part 332a are crimped.

As described above, the rotor 3 for the rotary electric machine in the present embodiment has the following features.

(1) The rotor 3 for the rotary electric machine 1 includes the magnet 32, the rotor core 31 into which the magnet 32 is inserted, and the housing 33 that fixes the rotor core 31, in which

the magnet 32 is configured by the main pole magnet 321 whose magnetization direction is directed in the radial direction and the spoke magnet 322 whose magnetization direction is directed in the circumferential direction,

the rotor core 31 is configured by the assembly of split cores 311,

the split core 311 includes the main pole magnet slot 312 into which the main pole magnet 321 is inserted, the d-axis core part 311a disposed on the stator 2 side with respect to the main pole magnet slot 312, and the back yoke 311b disposed on the side reverse to the d-axis core part 311a with respect to the main pole magnet slot 312,

the housing 33 includes the projection part 332 projecting toward the radial inner side,

the housing 33 including the projection part 332 is configured of a non-magnetic material,

two adjacent split cores 311 and the projection part 332 constitute the spoke magnet slot 313 that accommodates the spoke magnet 322, and

the split core 311 and the housing 33 are coupled by a dovetail structure of the back yoke 311b and two projection parts 332 adjacent to the back yoke 311b.

In FIG. 3, the side surface 311b2 of the back yoke 311b in the circumferential direction also serves as a dovetail structure for fixing the split core 311 to the housing 33. The effect of the dovetail structure in the present embodiment will be described with reference to FIG. 4. FIG. 4 is a view for describing a problem of a rotor according to a comparative example with the present invention.

In the comparative example of FIG. 4, a back yoke 311b' is also provided on the side (opposite gap surface side) reverse to a stator 2 with respect to a spoke magnet 322. The back yoke 311b' forms a magnetic circuit that short-circuits an N pole and an S pole of the spoke magnet, and a leakage magnetic flux Φ2 flows between the N pole and the S pole. Therefore, the back yoke 311b' on the opposite gap surface side with respect to the spoke magnet may be a factor that hinders the improvement in torque. That is, the back yoke 311b' is a portion unnecessary for torque generation.

In the present embodiment, the magnetic circuit portion in which the leakage magnetic flux Φ2 flows is eliminated by removing the back yoke 311b', and the magnetic characteristics in the rotor core 31 are improved, whereby it is possible to improve Turkey generated by the rotary electric machine 1. In addition, by removing the back yoke 311b', it is possible to reduce the weight of the rotor core 31 and to improve the output density of the rotary electric machine 1. In addition, in a case where a structural object for realizing the dovetail structure is added to the split core 311, the mass of the split core 311 increases, and the output density of the rotary electric machine 1 decreases. In the present embodiment, by using the portion of the back yoke 311b' for the dovetail structure, it is not necessary to add a structural object for realizing the dovetail structure to the split core 311, and the output density of the rotary electric machine 1 is not reduced. As a result, the trade-off relationship between the robust fixation between the split core 311 and the housing 33, and the output density of the rotary electric machine 1 in the conventional structure is eliminated, and it is possible to improve the output density of the rotary electric machine 1.

(2) The back yoke 311b constitutes a magnetic circuit that guides the magnetic flux $\Phi 1$ of the main pole magnet 321 to the adjacent spoke magnet 322. In the present embodiment, the magnetic flux $\Phi 1$ that generates torque flows as follows.

d-axis core part 311a of S-pole → main pole magnet 321 of S-pole → back yoke 311b → bridge 311c → spoke magnet 322 → bridge 311c → back yoke 311b → main pole magnet 321 of N-pole → d-axis core part 311a of N-pole

In such a magnetic circuit, it is necessary to make the dimensional relationship between the back yoke 311b and the bridge 311c appropriate so as not to hinder the flow of the magnetic flux $\Phi 1$. This will be described later.

(3) The projection part 332 of the housing 33 has the housing-side tapered part 332a having the tapered surface 332b whose width in the circumferential direction increases toward the split core 311 side,

the back yoke 311b of the split core 311 has the split core-side tapered part 311b1 having the tapered surface 311b2 whose width in the circumferential direction increases toward the housing 33 side, and the split core 311 and the housing 33 are coupled in a manner that the tapered surface 311b2 of the split core-side tapered part 311b1 and the tapered surface 332b of the housing-side tapered part 332a are crimped.

As a result, the dovetail structure is realized.
(4) The bridge part 311c is provided between the main pole magnet slot 312 and the spoke magnet slot 313,

the main pole magnet slot 312 is configured by using two bridge parts 311c disposed on both sides in the circumferential direction with respect to the main pole magnet 321, the d-axis core part 311a, and the back yoke 311b, and
the spoke magnet slot 313 is configured by using two bridge parts 311c of two adjacent split cores 311, two back yokes 311b, and the projection part 332 of the housing 33.

(5) The spoke magnet slot 313 is configured to include two d-axis core parts 311a of two adjacent split cores 311.
(6) The d-axis core part 311a has the d-axis core projection part 311e projecting in the circumferential direction at the end part 311d located on the stator 2 side in the radial direction, and
the d-axis core projection part 311e is provided to be separated from the d-axis core projection part 311e of the adjacent split core 311.

Since the d-axis core projection part 311e is provided, it is possible to prevent the spoke magnet 322 from jumping out toward the stator 2 side due to a centrifugal force or a magnetic attractive force. As a result, the robustness of the rotor 3 is improved. In addition, since the d-axis core projection parts 311e of two adjacent split cores 311 are separated from each other, it is possible to reduce the leakage magnetic flux short-circuited via the d-axis core projection part 311e, thereby improving the torque of the rotary electric machine 1.

(7) When the radial width of the back yoke 311b is set as L1, the circumferential width of the bridge part 311c is set as L2, and the radial width of the bridge part 311c is set as L3, L2 < L1 < L3 is satisfied.

The amount of magnetic flux flowing from the spoke magnet 322 to the back yoke 311b (alternatively, the magnetic flux flows from the back yoke 311b to the spoke magnet 322) is determined by a dimensional relationship of L1 to L3. When L1 is smaller than L2 (L1 < L2), the back yoke 311b is magnetically saturated, and it is not possible to effectively use the magnetic flux of the main pole magnet. Therefore, the torque can be improved by setting L2 < L1.

In addition, even if the amount of magnetic flux flowing through the back yoke 311b is the maximum, this amount of magnetic flux is not larger than the product of the magnetic flux density in the spoke magnet 322, L3, and the product thickness. Since the magnetic flux density in the magnet generally does not exceed 2 T (Tesla), even if L1 is smaller than L3 (L1 < L3), the rotary electric machine 1 can be driven within a range in which the back yoke 311b is not magnetically saturated. On the other hand, when L1 > L3 is set, the increment of the torque is smaller than the increment of the radial width of the back yoke 311b, and thus the torque density decreases.

As described above, by setting L2 < L1 < L3, it is possible to improve the torque density of the rotary electric machine 1 and to improve the output density.

[Change Example 1]

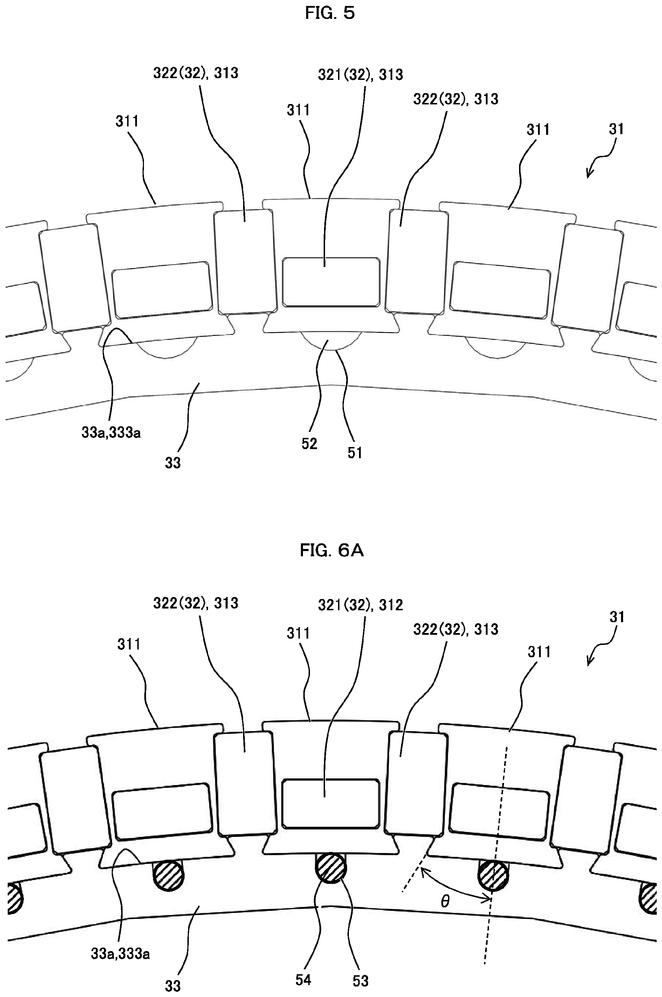

A change example (first change example) of the rotor core 31 will be described with reference to FIG. 5. FIG. 5 is an enlarged plan view illustrating the change example (first change example) of the split core 311 in FIG. 3.

In the present example, the housing 33 is provided with a recess (resin mold hole) 51 recessed toward the inner peripheral side on the outer peripheral surface 33a of the split core 311 facing the back yoke 311b. Resin 52 is molded in the recess 51.

When the housing 33 and the split core 311 are assembled, the recess 51 is a hole extending in the axial direction. By molding the resin 52 in the hole 51, the clearance between the split core 311 and the housing 33 can be filled with the resin 52. As a result, since the split core 311 is fixed to the housing 33 without a gap by the resin mold, the robustness of the rotor 3 is improved. Furthermore, since the split core 311 does not rattle the housing 33, it is possible to suppress vibration and noise.

In addition, even if the split core 311 and the housing 33 are loosely fastened in consideration of tolerance of the split core 311 in advance (even in a case where the clearance is large), the split core 311 can be fixed to the housing 33 with the molded resin 52. As a result, the mass productivity is improved.

(8) As described above, in the rotor 3 in the present example, the housing 33 is provided with the recess 51 recessed toward the inner peripheral side on the outer peripheral surface 33a of the split core 311 facing the back yoke 311b, and the recess is molded with the resin 52.

[Change Example 2]

A change example (second change example) of the rotor core 31 will be described with reference to FIG. 6A. FIG. 6A is an enlarged plan view illustrating the change example (second change example) of the split core 311 in FIG. 3.

In the present example, the housing 33 is provided with a recess (pin insertion hole) 53 recessed toward the inner peripheral side on the outer peripheral surface 33a of the split core 311 facing the back yoke 311b. A pin 54 is inserted into the recess 53. In the present example, as compared with the first change example, the resin 52 is changed to the pin 54, and the split core 311 may be fixed to the housing 33 by the pin 54.

(9) That is, in the rotor 3 in the present example, the housing 33 is provided with the recess 53 recessed toward the inner peripheral side on the outer peripheral surface 33a of the split core 311 facing the back yoke 311b, and the pin 54 is inserted into the recess 53.

As a result, even though the split core 311 is loosely fitted to the housing 33, the split core 311 receives a force of being pressed against the housing 33 in the radial direction by the pin 54. As a result, the tapered surfaces 311b2 constituting both side surfaces of the back yoke 311b of the split core 311 in the circumferential direction are in contact with the tapered surfaces 332b of the projection part 332 in the circumferential direction of the housing 33, and the split core 311 is fixed to the housing 33 without rattling. Thus, the robustness of the rotor 3 is improved, and it is possible to suppress vibration and noise.

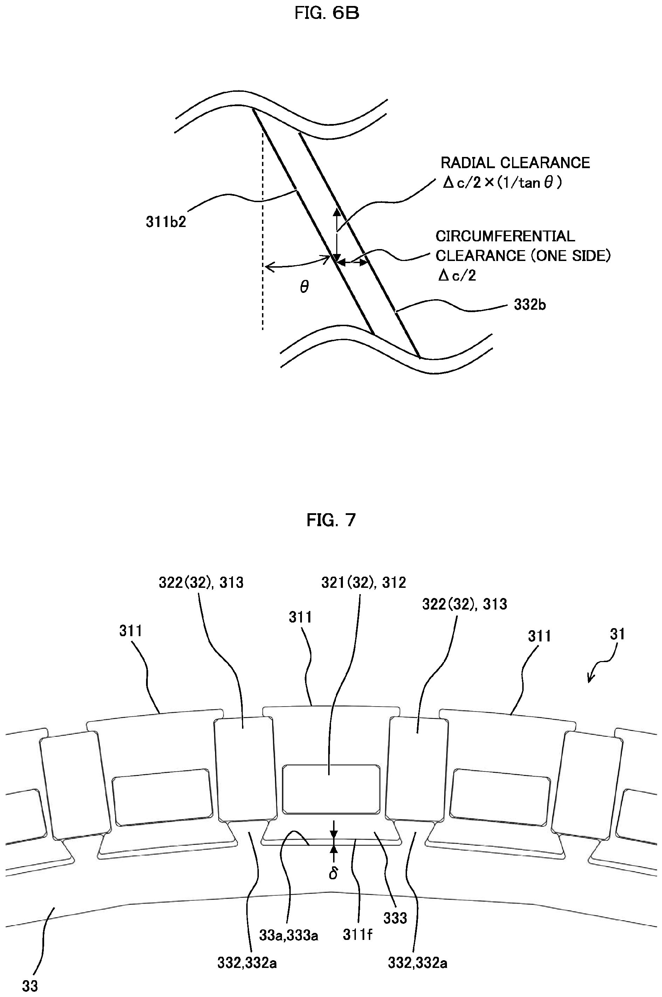

FIG. 6B illustrates a partially enlarged view of the tapered surfaces of the split core 311 and the housing 33 in FIG. 6A. In a case where the split core 311 is loosely fitted to the housing 33, when a taper angle is set as $\theta$ and a circumferential dimensional difference (clearance) between the split core 311 and the housing 33 is set as $\Delta c$ (one side is half $\Delta c$), a radial clearance between the split core 311 and the housing 33 is expressed as follows.

$$\Delta c/2 \times (1/\tan\theta)$$

That is, in a case where $\theta$ is larger than $\tan^{-1}(0.5) \approx 26.56$, the radial clearance is equal to or smaller than the circumferential clearance. The radial dimensional variation (due to the clearance) of the split core 311 is preferably small because it is a variation in the gap length between the stator 2 and the rotor 3. Thus, by adopting the configuration of the present example and setting $\theta \geq 26.56$, it is possible to reduce variations in the gap length, the characteristics of the rotary electric machine 1 are stabilized, and it is possible to improve the mass productivity.

[Change Example 3]

A change example (third change example) of the rotor core 31 will be described with reference to FIG. 7. FIG. 7 is an enlarged plan view illustrating the change example (third change example) of the split core in FIG. 3.

In the present example,
the housing 33 has a concave part (back yoke accommodation part) 333 that accommodates a back yoke 311b between two projection parts. The bottom surface 333a of the concave part 333 is configured by the outer peripheral surface 33a of the housing 33, which is located between two projection parts 332 and faces an inner peripheral side surface 311f of the back yoke 311b. The concave part 333 is configured such that a gap $\delta$ is formed between the bottom surface 333a and the inner peripheral side surface 311f of the back yoke 311b. That is, the outer peripheral surface 33a of the housing 33 and the inner peripheral side surface 311f of the back yoke 311b are not in contact with each other but are separated from each other.

In a case where the split core 311 is split on a q-axis, the back yoke 311b of the split core 311 projects circumferentially symmetrically. In this case, a spring force of the back yoke 311b at the time of fixing the split core 311 to the housing 33 and supporting the split core 311 equally acts on the split core 311 in the circumferential direction. Thus, the stress generated in the projection part 332 is equally divided into two projection parts 332, and the reliability of the mechanical strength of the projection part 322 is improved. In such a structure, the gap $\delta$ is a clearance hole in a case where the split core 311 is thermally expanded. As a result, it is possible to more firmly fix and support the split core 311.

(10) That is, in the rotor 3 in the present example,

the housing 33 has the concave part 333 that accommodates the back yoke 311b between two projection parts,

the bottom surface 333a of the concave part 333 is located between the two projection parts 332 and is configured by the outer peripheral surface 33a of the housing 33 facing the inner peripheral side surface 311f of the back yoke 311b, and
the concave part 333 is configured such that the gap $\delta$ is formed between the bottom surface 333a and the inner peripheral side surface 311f of the back yoke 311b.

[Change Example 4]

A change example (fourth change example) of the rotor core 31 will be described with reference to FIG. 7.

In the present example,
the housing 33 has a concave part (back yoke accommodation part) 333 that accommodates a back yoke 311b between two projection parts. The bottom surface 333a of the concave part 333 is configured by the outer peripheral surface 33a of the housing 33, which is located between two projection parts 332 and faces an inner peripheral side surface 311f of the back yoke 311b. The concave part 333 is configured such that a gap $\delta$ is formed between the bottom surface 333a and the inner peripheral side surface 311f of the back yoke 311b. That is, the outer peripheral surface 33a of the housing 33 and the inner peripheral side surface 311f of the back yoke 311b are not in contact with each other but are separated from each other.

Thus, the split core 311 can be easily inserted into the housing 33 from the axial direction, and the assemblability is improved. An adhesive or a foaming material (not illustrated) is accommodated in the gap $\delta$. The adhesive or the foaming material may fill a part of a space formed by the gap $\delta$, or filling may be performed to fill the entirety of the space.

Since the split core 311 is adhesively fixed to the housing 33 by accommodating the adhesive in the gap $\delta$, the robustness of the rotor 3 is improved. Furthermore, since the split core 311 does not rattle the housing 33, it is possible to suppress vibration and noise.

Similarly, by accommodating the foaming material in the gap $\delta$, the split core 311 receives a force of being pressed against the housing 33 in the radial direction, by the foam material foamed after the housing 33 and the split core 311 are assembled. As a result, the tapered surfaces 311b2 constituting both side surfaces of the back yoke 311b of the split core 311 in the circumferential direction are in contact with the tapered surfaces 332b of the projection part 332 in the circumferential direction of the housing 33, and the split core 311 is fixed to the housing 33 without rattling. Thus, the robustness of the rotor 3 is improved, and it is possible to suppress vibration and noise.

In a case where the split core 311 is loosely fitted to the housing 33, when a taper angle is set as $\theta$ and a circumferential dimensional difference (clearance) between the split core 311 and the housing 33 is set as $\Delta$c (one side is half $\Delta$c), a radial clearance between the split core 311 and the housing 33 is expressed as follows.

$$\Delta c/2 \ \times \ (1/\tan\theta)$$

That is, in a case where $\theta$ is larger than $\tan^{-1}(0.5) \approx 26.56$, the radial clearance is equal to or smaller than the circumferential clearance. The radial dimensional variation (due to the clearance) of the split core 311 is preferably small because it is a variation in the gap length between the stator 2 and the rotor 3. Thus, by adopting the configuration of the present example and setting $\theta \geq 26.56$, it is possible to reduce variations in the gap length, the characteristics of the rotary electric machine 1 are stabilized, and it is possible to improve the mass productivity.

[Others]

The rotor 3 in the present embodiment and the change examples is applied to the rotary electric machine, whereby it is possible to improve the output density.

(11) That is, the rotary electric machine including the rotor and the stator facing the rotor with a predetermined gap interposed therebetween may include the rotor 3 in the present embodiment and the change examples as the rotor.

[Combination with Fractional Slot Concentrated Winding]

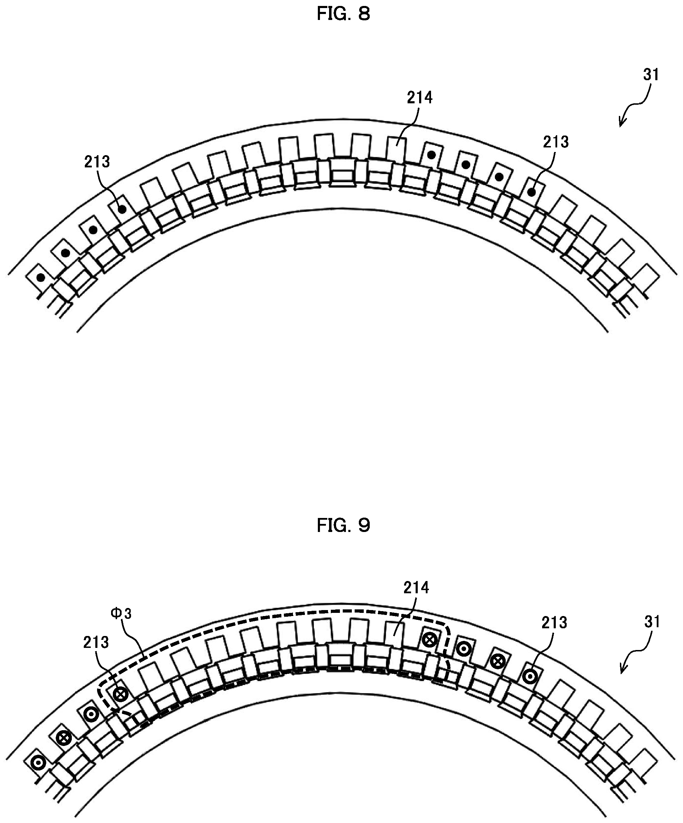

A combination of the rotor 3 and the fractional slot concentrated winding according to the present embodiment will be described with reference to FIGS. 8 and 9. FIG. 8 is a plan view illustrating a part of the rotor 3 and the stator 2 in a case where the rotary electric machine 1 with fractional slot concentrated winding is configured by using the rotor 3 according to the present invention. FIG. 9 is a view for describing advantages in a case where the rotary electric machine 1 with the fractional slot concentrated winding is configured by using the rotor 3 according to the present invention. Note that FIGS. 8 and 9 illustrate only the coils 213 having the same phase.

In the rotary electric machine 1 described above, it is preferable to set such fractional slots in which a value obtained by dividing the number of slots of the stator 2 by the number of phases of the coil 213 and the number of poles of the rotor 3, that is, the number of slots per pole and per phase becomes a fraction. In this case, the coil 213 inserted into the slot of the stator 2 may be formed into a fractional slot concentrated winding that forms a rotating magnetic field by continuously straddling at least two or more adjacent slots by the coils 213 of the same phase.

In the case of the fractional slot concentrated winding, a position (phase) of a stator tooth facing a pole of a certain rotor is different from a position (phase) of a tooth facing an adjacent pole of the rotor. That is, for example, the distribution of the magnetic flux from a certain N pole to the adjacent S pole is different from the distribution of the magnetic flux from the S pole to the adjacent N pole. In particular, in the fractional slot concentrated winding, when a plurality of coils 213 of the same phase continuously straddling adjacent slots is regarded as one coil group, a magnetic flux caused by a current flowing through two adjacent coil groups is also generated between the two coil groups. Therefore, in a case where the rotor core 31 is not split and the back yoke 311b of the rotor 3 is integrated, the magnetic flux across a plurality of poles flows through the back yoke 311b due to the asymmetry of the magnetic flux distribution for each pole as described above.

The magnetic flux flowing through the back yoke 311b across the plurality of poles is different from the magnetic flux contributing to the torque, and is a magnetic flux that generates torque pulsation and only increases the iron loss of the back yoke 311b of the rotor 3.

In the configuration of the present embodiment, since the rotor core 31 is configured by the split core 311, the magnetic resistance against the magnetic flux flowing through the back yoke 311A2 across the plurality of poles can be increased in a split part 311j, and it is possible to reduce the magnetic flux Φ3.

As described above, since the split part 311j in the present embodiment is independent of the magnetic path of the main magnetic flux, by applying the split core 311 in the present embodiment to the fractional slot concentrated winding, it is possible to reduce the torque pulsation caused by the magnetic flux Φ3 flowing through the back yoke 311A2 across the plurality of poles and the iron loss caused in the back yoke 311A2 of the rotor 3 without deteriorating the basic performance of the rotary electric machine 1 such as torque and output. As a result, it is possible to improve the quietness of the rotary electric machine 1 and to improve the efficiency of the rotary electric machine 1.

(12) That is, the rotary electric machine 1 in the present example

is a fractional slot in which the value obtained by dividing the number of slots 214 of the stator 2 by the number of phases of the coil and the number of poles of the rotor 3, that is, the number of slots per pole and per phase is a fraction, and
the coil 213 inserted into the slot 214 is a fractional slot concentrated winding in which the coils 213 of the same phase continuously straddle at least two or more adjacent slots 214 to form a rotating magnetic field.

[Embodiment of Vehicle]

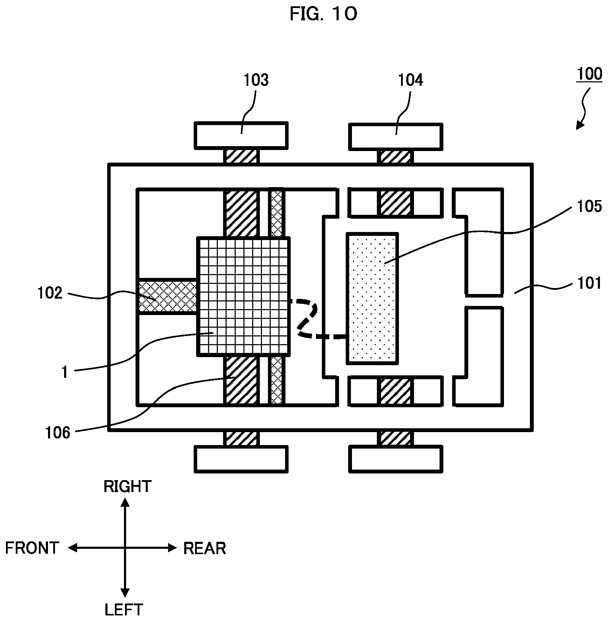

An embodiment in which the rotary electric machine 1 according to the present invention is mounted on a vehicle (xEV) will be described with reference to FIG. 10. FIG. 10 is a view illustrating a configuration of an xEV 100 adopting the rotary electric machine 1 according to the embodiment of the present invention.

The rotary electric machine 1 as a drive motor is fixed and supported to a cart 101 by a support member 102. The rotor of the rotary electric machine 1 is joined to an axle 106, and the rotary electric machine 1 drives wheels 103 via the axle 106. The vehicle 100 includes the rotary electric machine 1, a battery 105, and a power conversion device 107 that converts DC power of the battery 105 into AC power and supplies the AC power to the rotary electric machine 1.

In the xEV in the present embodiment, by providing the rotary electric machine 1 in the present embodiment, it is possible to realize the improvement in the space factor in the slot of the coil 11, the reduction in the loss, and a simple coil heat dissipation structure, and to achieve a high output density of the drive motor. As a result, a high torque can be obtained, and an xEV excellent in cost performance is provided.

(13) The vehicle 100 in the present example is a vehicle including the rotary electric machine, the battery 105, and the power conversion device 107 that converts DC power of the battery 105 into AC power and supplies the AC power to the rotary electric machine 1,
and includes the rotor 3 of the rotary electric machine 1 described in the embodiment and the change examples described above, as the rotary electric machine.

The present invention is not limited to the above embodiments, and various modification examples may be provided. For example, the above embodiment has been described in detail in order to explain the present invention in an easy-to-understand manner, and the above embodiment is not necessarily limited to a case including all the configurations. Regarding some components in the embodiments, other components can be added, deleted, and replaced.

Reference Signs List

1 rotary electric machine
2 stator
3 rotor
31 rotor core
32 magnet
33 housing
33a outer peripheral surface of housing 33
51 recess
52 resin
53 recess
54 pin
100 vehicle
105 battery
107 power conversion device

213 coil
214 slot of stator 2
311 split core
311a d-axis core part
311b back yoke
311b1 split core-side tapered part
311b2 tapered surface of split core-side tapered part 311b1
311c bridge part
311d end part of d-axis core part 311a located on stator 2 side in radial direction
311e d-axis core projection part projecting in circumferential direction
311f inner peripheral side surface of back yoke 311b
312 main pole magnet slot
313 spoke magnet slot
321 main pole magnet
322 spoke magnet
332 projection part
332a housing-side tapered part
332b tapered surface of housing-side tapered part 332a
333 concave part that accommodates back yoke 311b
333a bottom surface of concave part 333
L1 radial width of back yoke 311b
L2 circumferential width of bridge part 311c
L3 radial width of bridge part 311c
δ gap
Φ1 magnetic flux of main pole magnet 321

**Claims**

1. A rotor for a rotary electric machine, the rotor comprising:

   a magnet, a rotor core into which the magnet is inserted, and a housing that fixes the rotor core, wherein
   the magnet is configured by a main pole magnet whose magnetization direction is directed in a radial direction and a spoke magnet whose magnetization direction is directed in a circumferential direction,
   the rotor core is configured by an assembly of split cores,
   the split core includes a main pole magnet slot into which the main pole magnet is inserted, a d-axis core part disposed on a stator side with respect to the main pole magnet slot, and a back yoke disposed on a side reverse to the d-axis core part with respect to the main pole magnet slot,
   the housing includes a projection part projecting toward the split core side,
   the housing including the projection part is configured of a non-magnetic material,

two adjacent split cores and the projection part constitute a spoke magnet slot that accommodates the spoke magnet, and
the split core and the housing are coupled by a dovetail structure of the back yoke and two projection parts adjacent to the back yoke.

2. The rotor for a rotary electric machine according to claim 1, wherein
the back yoke constitutes a magnetic circuit that guides a magnetic flux of the main pole magnet to the adjacent spoke magnet.

3. The rotor for a rotary electric machine according to claim 1, wherein

   the projection part of the housing has a housing-side tapered part having a tapered surface whose width in the circumferential direction increases toward the split core,
   the back yoke of the split core includes a split core-side tapered part having a tapered surface whose width in the circumferential direction increases toward the housing, and
   a tapered surface of the split core-side tapered part in the split core and a tapered surface of the housing-side tapered part in the housing are crimped and joined.

4. The rotor for a rotary electric machine according to claim 2, wherein

   a bridge part is provided between the main pole magnet slot and the spoke magnet slot,
   the main pole magnet slot is configured by using two bridge parts disposed on both sides of the main pole magnet in the circumferential direction, the d-axis core part, and the back yoke, and
   the spoke magnet slot is configured by using two bridge parts of two adjacent split cores, two back yokes, and the projection part of the housing.

5. The rotor for a rotary electric machine according to claim 4, wherein
the spoke magnet slot includes two d-axis core parts of two adjacent split cores.

6. The rotor for a rotary electric machine according to claim 5, wherein

   the d-axis core part includes a d-axis core projection part projecting in the circumferential direction at an end part located on the stator side in the radial direction, and
   the d-axis core projection part is provided to be separated from a d-axis core projection part of the adjacent split core.

**7.** The rotor for a rotary electric machine according to claim 4, wherein
when a radial width of the back yoke is set as L1, a circumferential width of the bridge part is set as L2, and a radial width of the bridge part is set as L3,

$$L2 < L1 < L3.$$

**8.** The rotor for a rotary electric machine according to claim 1, wherein

the housing is provided with a recess that is recessed toward an inner peripheral side on an outer peripheral surface of the split core facing the back yoke, and
the recess is molded with resin.

**9.** The rotor for a rotary electric machine according to claim 1, wherein

the housing is provided with a recess that is recessed toward an inner peripheral side on an outer peripheral surface of the split core facing the back yoke, and
a pin is inserted into the recess.

**10.** The rotor for a rotary electric machine according to claim 1, wherein

the housing has a concave part that accommodates the back yoke between two projection parts,
a bottom surface of the concave part is located between two projection parts and is configured by an outer peripheral surface of the housing that faces an inner peripheral side surface of the back yoke, and
the concave part is configured such that a gap is formed between the bottom surface and the inner peripheral side surface of the back yoke.

**11.** The rotor for a rotary electric machine according to claim 10, wherein
the gap accommodates an adhesive or a foaming material that generates a force to push the back yoke in the radial direction.

**12.** A rotary electric machine comprising: a rotor; and a stator facing the rotor with a predetermined gap interposed therebetween, wherein
the rotor according to claim 1 is provided as the rotor.

**13.** The rotary electric machine according to claim 12, wherein

the rotary electric machine is a fractional slot in which a value obtained by dividing the number of slots of the stator by the number of phases of a coil and the number of poles of the rotor, that is, the number of slots per pole and per phase is a fraction, and
the coil inserted into the slot is a fractional slot concentrated winding in which coils of the same phase continuously straddle at least two or more adjacent slots to form a rotating magnetic field.

**14.** A vehicle comprising: a rotary electric machine; a battery; and a power conversion device that converts DC power of the battery into AC power and supplies the AC power to the rotary electric machine, wherein the rotary electric machine includes the rotor for a rotary electric machine according to claim 1.

FIG. 1

FIG. 2

FIG. 3

FIG. 4

FIG. 5

FIG. 6A

FIG. 6B

RADIAL CLEARANCE
$\Delta c/2 \times (1/\tan\theta)$

CIRCUMFERENTIAL
CLEARANCE (ONE SIDE)
$\Delta c/2$

311b2

$\theta$

332b

FIG. 7

322(32), 313    321(32), 312    322(32), 313

311    311    311    31

$\delta$

33a,333a    311f    333

332,332a    332,332a

33

## FIG. 8

## FIG. 9

## FIG. 10

## INTERNATIONAL SEARCH REPORT

| International application No. |
|---|
| **PCT/JP2024/021131** |

**A. CLASSIFICATION OF SUBJECT MATTER**

*H02K 1/2783*(2022.01)i
FI: H02K1/2783

According to International Patent Classification (IPC) or to both national classification and IPC

**B. FIELDS SEARCHED**

Minimum documentation searched (classification system followed by classification symbols)

H02K1/2783

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Microfilm of the specification and drawings annexed to the request of Japanese Utility Model Application No. 181294/1983 (Laid-open No. 89753/1985) (MITSUBISHI ELECTRIC CORPORATION) 19 June 1985 (1985-06-19), specification, p. 3, line 7 to specification, p. 4, line 9, fig. 1-6 | 1-14 |
| A | JP 2001-359263 A (DENSO CORPORATION) 26 December 2001 (2001-12-26)<br>entire text, all drawings | 1-14 |
| A | JP 2016-93052 A (DENSO CORPORATION) 23 May 2016 (2016-05-23)<br>entire text, all drawings | 1-14 |
| P, A | WO 2023/171560 A1 (VALEO JAPAN CO., LTD.) 14 September 2023 (2023-09-14)<br>paragraphs [0022]-[0062], fig. 1-8 | 1-14 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/021131** |

| Patent document cited in search report | | | Publication date (day/month/year) | Patent family member(s) | Publication date (day/month/year) |
| --- | --- | --- | --- | --- | --- |
| JP | 60-89753 | U1 | 19 June 1985 | (Family: none) | |
| JP | 2001-359263 | A | 26 December 2001 | (Family: none) | |
| JP | 2016-93052 | A | 23 May 2016 | (Family: none) | |
| WO | 2023/171560 | A1 | 14 September 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023286606 A